# EUROPÄISCHE PATENTSCHRIFT

(11) **EP 0 907 456 B1**
(45) Veröffentlichungstag und Bekanntmachung des Hinweises auf die Patenterteilung: **17.11.1999**
(21) Anmeldenummer: 97920628.1
(22) Anmeldetag: 09.04.1997
(51) Int. Cl.: B23Q 1/40, B23Q 1/54, F16C 3/035

(54) **WERKZEUGMASCHINE**
MACHINE TOOL
MACHINE-OUTIL

(30) Priorität: 29.05.1996 DE 19621464; 12.08.1996 US 23893 P
(43) Veröffentlichungstag der Anmeldung: 14.04.1999
(73) Patentinhaber: INA Wälzlager Schaeffler oHG, 91072 Herzogenaurach (DE)
(72) Erfinder: LUNZ, Erich, D-91475 Lonnerstadt (DE); BODE, Helmut, D-91074 Herzogenaurach (DE); EDER, Jean-Marie, F-67360 Woerth (FR)
(86) Internationale Anmeldenummer: EP9701749
(87) Internationale Veröffentlichungsnummer: WO9745230

(56) Entgegenhaltungen:
- DE-A- 2 618 535
- DE-A- 3 818 329
- US-A- 3 995 916
- US-A- 4 293 166
- US-A- 5 401 128

## Beschreibung

### Hintergrund der Erfindung

Die vorliegende Erfindung betrifft eine Werkzeugmaschine, mit mehreren je aus ineinander angeordneten Rohren gebildeten Teleskoparmen, die einerseits an einem Rahmen und andererseits an einer Werkzeugaufnahme gelenkig befestigt sind. Eine derartige Werkzeugmaschine ist beispielsweise aus der US-A 54 01 128 bekannt. Im Gegensatz zu konventionellen Werkzeugmaschinen werden hier geringere Massen bewegt. Dies hat zur Folge, daß höhere Stellgeschwindigkeiten gefahren werden, wobei insbesondere die Steifigkeit zwischen Rahmen und Werkzeugaufnahme sehr hoch ist. In vielen Fällen sind insgesamt sechs Teleskoparme vorgesehen, wobei alle Teleskoparme voneinander unabhängig ein- bzw. ausgefahren werden können. Dies hat zur Folge, daß die Werkzeugaufnahme jede gewünschte Position im Raum einnehmen kann. Eine hohe Steifigkeit der Teleskoparme ist bei derartigen Werkzeugmaschinen von besonders großer Bedeutung.

### Zusammenfassung der Erfindung

Aufgabe der vorliegenden Erfindung ist es daher, eine gattungsgemäße Werkzeugmaschine derart weiterzubilden, daß die Teleskoparme einerseits sehr steif ausgebildet und andererseits leichtgängig ein- bzw. ausfahrbar gebildet sind.

Erfindungsgemäß wird diese Aufgabe dadurch gelöst, daß das äußere Rohr mit mehreren über den Umfang verteilten Aussparungen versehen ist, in denen Kugelumlaufeinheiten angeordnet sind, die jeweils aus einem Tragkörper mit einer in einen Lastabschnitt und einen daran anschließenden lastfreien Rückführungsabschnitt unterteilten endlosen Kugelrille bestehen, an deren Lastabschnitt und an einer an dem inneren Rohr vorgesehenen, dem Lastabschnitt gegenüberliegenden Kugelrille Kugeln abwälzen, die aus dem Lastabschnitt in den Rückführungsabschnitt geführt werden. Bei dieser Anordnung ist eine leichtgängige Verschiebbarkeit der Teleskoparme gewährleistet, wobei das innere und das äußere Rohr mittels der Kugellagerung zueinander verdrehgesichert sind. Die Länge des Lastabschnitts bzw. die Anzahl der im Lastabschnitt abwälzenden Kugeln wird entsprechend der Geometrie des Teleskoparms bzw. entsprechend den zu erwartenden Belastungen ausgelegt. Vorzugsweise sind mehrere über den Umfang des inneren Rohres verteilt angeordnete Paare von Kugelrillen vorgesehen, wobei die zueinander parallelen, einander benachbarten Kugelrillen eines jeden Paares gegenläufig geneigt sind. Die Tragkörper der Kugelumlaufeinheiten sind entsprechend mit Paaren von Kugelrillen versehen, so daß im Querschnitt gesehen jeweils zweireihige Schrägkugellager gebildet sind, wobei die beiden Drucklinien der Kugelreihen vorzugsweise einen Winkel von ca. 90° einschließen. Kugelumlaufeinheiten sind in vielfältigen Varianten bekannt. Beispielsweise in der DE-A 26 18 535 ist eine derartige Kugelumlaufeinheit anschaulich offenbart.

Bei einer weiteren erfindungsgemäßen Weiterbildung ist vorgesehen, daß das äußere Rohr mit einer quer zur Längsachse angeordneten Tangentialbohrung versehen ist, wobei der Tragkörper mit einer zu der Tangentialbohrung koaxialen Gewindebohrung versehen ist, in die eine durch die Tangentialbohrung durchgeführte Schraube eingreift. Die Anlagefläche ist durch eine Wand der Aussparung gebildet, in der der Tragkörper angeordnet ist. Mittels Anziehen der Schraube wird der Tragkörper gegen diese Anlagefläche gepreßt, wobei ggf. zwischen Anlagefläche und Tragkörper Ausgleichsbeilagen zur einwandfreien Positionierung des Tragkörpers vorgesehen sein können. Zur radialen Abstützung der Kugelumlaufeinheit ist die äußere Mantelfläche des äußeren Rohres mit einem Deckel versehen, wobei dem Deckel eine Abflachung an der äußeren Mantelfläche des äußeren Rohres zugeordnet ist. Vorzugsweise bildet der Deckel im Querschnitt gesehen einen Kreisabschnitt des äußeren Rohres. Auf diese Weise weist das äußere Rohr eine glattzylindrische Mantelfläche auf, ohne daß Verletzungsgefahr durch Vorsprünge und Kanten besteht. Der Deckel mag zweckmäßigerweise mittels Schrauben mit dem äußeren Rohr verbunden sein.

Nachstehend wird die Erfindung anhand eines in insgesamt zwei Figuren dargestellten Ausführungsbeispieles näher erläutert.

### Kurze Beschreibung der Zeichnungen

Es zeigen:
- Figur 1: eine erfindungsgemäße Werkzeugmaschine in perspektivischer Darstellung und
- Figur 2: einen Querschnitt durch einen Teleskoparm der Werkzeugmaschine aus Figur 1.

### Ausführliche Beschreibung der Zeichnungen

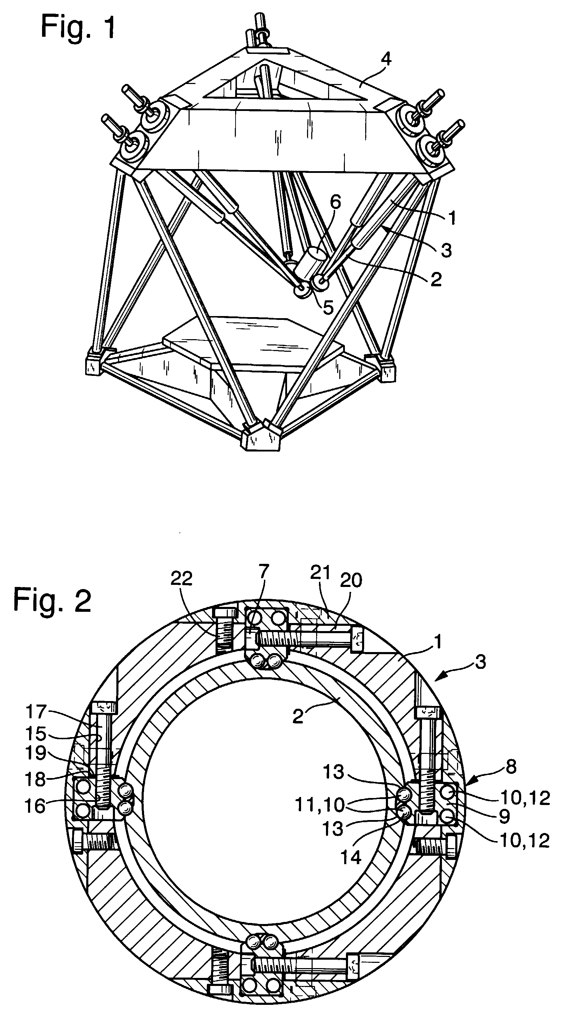

Die in der Figur 1 abgebildete Werkzeugmaschine ist mit mehreren je aus ineinander angeordneten Rohren 1, 2 gebildeten Teleskoparmen 3 versehen. Die Teleskoparme 3 sind einerseits an einem Rahmen 4 und andererseits an einer Werkzeugaufnahme 5 gelenkig befestigt. Die Werkzeugaufnahme 5 ist mit einem nicht näher dargestellten Werkzeug versehen, das von einem Motor 6 angetrieben wird. Durch ein- bzw. ausfahren eines oder mehrerer Teleskoparme 3 läßt sich die Werkzeugaufnahme 5 in jeder gewünschten Position im Raum bewegen.

Figur 2 zeigt im Querschnitt einen Teleskoparm 3, der in der Figur 1 dargestellten Werkzeugmaschine. Das äußere Rohr 1 ist mit mehreren über den Umfang verteilten Aussparungen 7 versehen, in denen Kugelumlaufeinheiten 8 angeordnet sind. Jede Kugelumlaufeinheit 8 besteht aus einem Tragkörper 9, der zwei einander benachbarte endlose Kugelrillen 10 aufweist. Jede Kugelrille 10 weist einen Lastabschnitt 11 und einen an den Lastabschnitt 11 anschließenden lastfreien Rückführungsabschnitt 12 auf. An dem inneren Rohr 2 sind mehrere über den Umfang des inneren Rohres 2 verteilt angeordnete Paare von Kugelrillen 13 vorgesehen, wobei Kugeln 14 an den Kugelrillen 10, 13 des Tragkörpers 9 und des inneren Rohres 2 abwälzen. Das äußere Rohr 1 ist mit einer quer zur Längsachse angeordneten Tangentialbohrung 15 und der Tragkörper 9 ist mit einer zu der Tangentialbohrung 15 koaxialen Gewindebohrung 16 versehen, in die eine durch die Tangentialbohrung 15 durchgeführte Schraube 17 eingreift. Zwischen einer Anlagefläche 18 der Aussparung 7 und den Tragkörper 9 ist eine Ausgleichsbeilage 19 angeordnet, die beim Anziehen der Schraube 17 zwischen dem Tragkörper 9 und dem äußeren Rohr 1 eingespannt ist.

Die äußere Mantelfläche des äußeren Rohres 1 ist mit einer Abflachung 20 versehen, an der ein Deckel 21 anliegt. Der Deckel 21 bildet einen Kreisabschnitt des äußeren Rohres 1. Der Deckel 21 ist mittels Schrauben 22 mit dem äußeren Rohr 1 verschraubt.

### Bezugszahlenliste

- 1: äußeres Rohr
- 2: inneres Rohr
- 3: Teleskoparm
- 4: Rahmen
- 5: Werkzeugaufnahme
- 6: Werkzeug
- 7: Aussparung
- 8: Kugelumlaufeinheit
- 9: Tragkörper
- 10: Kugelrille
- 11: Lastabschnitt
- 12: Rückführungsabschnitt
- 13: Kugelrille
- 14: Kugel
- 15: Tangentialbohrung
- 16: Gewindebohrung
- 17: Schraube
- 18: Anlagefläche
- 19: Ausgleichsbeilage
- 20: Abflachung
- 21: Deckel
- 22: Schraube

## Patentansprüche

1. Werkzeugmaschine, mit mehreren je aus ineinander angeordneten Rohren (1, 2) gebildeten Teleskoparmen (3), die einerseits an einem Rahmen (4) und andererseits an einer Werkzeugaufnahme (5) gelenkig befestigt sind, **dadurch gekennzeichnet**, daß das äußere Rohr (1) mit mehreren über den Umfang verteilten Aussparungen (7) versehen ist, in denen Kugelumlaufeinheiten (8) angeordnet sind, die jeweils aus einem Tragkörper (9) mit einer in einen Lastabschnitt (11) und einen daran anschließenden lastfreien Rückführungsabschnitt (12) unterteilten endlosen Kugelrille (10) bestehen, an deren Lastabschnitt (11) und an einer an dem inneren Rohr (2) vorgesehenen, dem Lastabschnitt (11) gegenüberliegenden Kugelrille (13) Kugeln (14) abwälzen, die aus dem Lastabschnitt (11) in den Rückführungsabschnitt (12) geführt werden.

2. Werkzeugmaschine nach Anspruch 1, **dadurch gekennzeichnet**, daß mehrere über den Umfang des inneren Rohres (2) verteilt angeordnete Paare von Kugelrillen (13) vorgesehen sind, wobei die zueinander parallelen, einander benachbarten Kugelrillen (13) eines jeden Paares gegenläufig geneigt sind.

3. Werkzeugmaschine nach Anspruch 1, **dadurch gekennzeichnet**, daß das äußere Rohr (1) mit einer quer zur Längsachse angeordneten Tangentialbohrung (15) versehen ist, die eine an dem äußeren Rohr (1) vorgesehen Anlagefläche (18) für den Tragkörper (9) durchstößt, wobei der Tragkörper (9) mit einer zu der Tangentialbohrung (15) koaxialen Gewindebohrung (16) versehen ist, in die eine durch die Tangentialbohrung (15) durchgeführte Schraube (17) eingreift.

4. Werkzeugmaschine nach Anspruch 3, **dadurch gekennzeichnet**, daß zwischen der Anlagefläche (18) und dem Tragkörper (9) wenigstens eine Ausgleichsbeilage (19) angeordnet ist.

5. Werkzeugmaschine nach Anspruch 1, **dadurch gekennzeichnet**, daß die äußere Mantelfläche des äußeren Rohres (1) mit einer als Anlagefläche für einen Deckel (21) vorgesehenen Abflachung (20) versehen ist, wobei der Tragkörper (9) an dem Deckel (21) radial abgestützt ist.

6. Werkzeugmaschine nach Anspruch 5, **dadurch gekennzeichnet**, daß der Deckel (21) im Querschnitt gesehen einen Kreisabschnitt des äußeren Rohres (1) bildet.

7. Werkzeugmaschine nach Anspruch 6, **dadurchgekennzeichnet**, daß der Deckel (21) mittels Schrauben (22) mit dem äußeren Rohr (1) verbunden ist.

## Claims

1. Machine tool having several telescopic arms (3), each of which is formed by inter-inserted tubes (1, 2), the telescopic arms (3) being articulated at one end on a frame (4) and at the other end, on a tool holder (5), characterised in that the outer tube (1) comprises several recesses (7) arranged in spaced relationship on the periphery, in which recesses (7) are arranged recirculating ball bearing units (8), each of which consists of a carrier body (9) having an endless ball track (10) which is divided into a load-bearing portion (11) and a load-free return portion (12) continuing from the load-bearing portion (11), and balls (14) roll on the load-bearing portion (11) and on a ball track (13) situated opposite the load-bearing portion (11) in the inner tube (2) and are guided out of the load-bearing portion (11) into the return portion (12).

2. Machine tool according to Claim 1, characterised in that several pairs of ball tracks (13) are arranged in spaced relationship on the periphery of the inner tube (2), and the parallel and neighbouring ball tracks (13) of each pair are oppositely inclined.

3. Machine tool according to Claim 1, characterised in that the outer tube (1) is provided with a tangential bore (15) which is arranged crosswise to the longitudinal axis and pierces a contact surface (18) provided on the outer tube (1) for the carrier body (9), the carrier body (9) having a threaded bore (16) which is coaxial with the tangential bore (15) and into which a screw (17) inserted through the tangential bore (15) engages.

4. Machine tool according to Claim 3, characterised in that at least one levelling shim (19) is arranged between the contact surface (18) and the carrier body (9).

5. Machine tool according to Claim 1, characterised in that the outer peripheral surface of the outer tube (1) is provided with a flattened portion (20) to serve as a contact surface for a cover (21), the carrier body (9) being radially supported on the cover (21).

6. Machine tool according to Claim 5, characterised in that, as viewed in cross-section, the cover (21) forms a circular segment of the outer tube (1).

7. Machine tool according to Claim 6, characterised in that the cover (21) is connected to the outer tube (1) by screws (22).

## Revendications

1. Machine-outil ayant plusieurs bras télescopiques (3) formés par des tubes (1, 2) insérés les uns dans les autres et qui sont articulés d'un co'té sur un cadre (4) et de l'autre côté sur un raccordement d'outil (5), caractérisée en ce que le tube extérieur (1) est pourvu de plusieurs évidements (7) qui sont répartis sur la périphérie et dans lesquels sont agencés des ensembles de circuits de billes (8) qui comprennent, chacun, un corps porteur (9) ayant une piste de billes (10) sans fin (10) qui est divisée dans une partie chargée (11) et une partie non chargée de retour (12) qui se raccorde à ladite partie chargée (11), en ce que des billes (14) roulent sur la partie chargée (11) de la piste de billes (10) ainsi que sur une piste de billes (13) disposée vis-à-vis de la partie chargée (11) dans le tube intérieur (2), et en ce que les billes (14) sont guidées hors de la partie chargée (11) dans la partie de retour (12).

2. Machine-outil selon la revendication 1, caractérisée en ce que plusieurs paires de pistes de billes (13) sont réparties sur la périphérie du tube intérieur (2), et les pistes de billes (13) avoisinées et parallèles, l'une à l'autre, de chaque paire sont inclinées dans des sens opposés.

3. Machine-outil selon la revendication 1, caractérisée en ce que le tube extérieur (1) est muni d'un alésage tangentiel (15) qui est agencé en travers de l'axe longitudinal et qui perce une surface de contact (18) prévue sur le tube extérieur (1) pour le corps porteur (9) qui est pourvu d'un alésage taraudé (16) coaxial à l'alésage tangentiel (15), alors qu'une vis (17) insérée au travers de l'alésage tangentiel (15) s'engage dans l'alésage taraudé (16).

4. Machine-outil selon la revendication 4, caractérisée en ce qu'au moins une rondelle d'égalisation (19) est agencée entre la surface de contact (18) et le corps porteur (9).

5. Machine-outil selon la revendication 1, caractérisée en ce que la surface périphérique externe du tube extérieur (1) comprend un aplatissement (20) qui forme une surface de contact pour un couvercle (21) sur lequel se supporte radialement le corps porteur (9).

6. Machine-outil selon la revendication 5, caractérisée en ce que, dans une vue en coupe transversale, le couvercle (21) forme un segment de cercle du tube extérieur (1).

7. Machine-outil selon la revendication 6, caractérisée en ce que le couvercle (21) est relié au tube extérieur (1) par des vis (22).
